(19)

**Europäisches Patentamt**
**European Patent Office**
**Office européen des brevets**

(11) **EP 4 741 906 A1**

(12) **EUROPEAN PATENT APPLICATION**
published in accordance with Art. 153(4) EPC

(43) Date of publication:
**13.05.2026 Bulletin 2026/20**

(51) International Patent Classification (IPC):
***G02B 21/36*** $^{(2006.01)}$

(21) Application number: 24838938.9

(22) Date of filing: **19.06.2024**

(86) International application number:
**PCT/ES2024/070384**

(87) International publication number:
**WO 2025/012494 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 ES 202330568**

(71) Applicant: **Universitat de València
46010 Valencia (ES)**

(72) Inventors:
• **MARTÍNEZ CORRAL, Manuel
46010 Valencia Valencia (ES)**
• **SAAVEDRA TORTOSA, Genaro
46010 Valencia (ES)**
• **TOLOSA RUIZ, Ángel
46010 Valencia (ES)**
• **SÁNCHEZ ORTIGA, Emilio
46010 Valencia (ES)**
• **INCARDONA, Nicolo
46010 Valencia (ES)**

(74) Representative: **Elzaburu S.L.P.
Paseo de la Castellana 259C
Torre de Cristal, planta 28
28046 Madrid (ES)**

(54) **ACCESSORY FOR OBTAINING A FOCAL IMAGE STACK, MICROSCOPE COMPRISING SAME AND METHOD FOR OBTAINING A FOCAL IMAGE**

(57) The present invention relates to an accessory comprising a first converging lens coupling (3); a second converging lens coupling (6), inverted with respect to the first coupling (3); and a varifocal lens (7) displaceable along the optical axis between the first and second coupling (3, 6) on a mechanical means (8), said accessory (100) being couplable to a host microscope (200) such that the first object focal plane, $F_1$, coincides with the image focal plane, $F_T'$, of the tube lens (203) of the host microscope (200), the varifocal lens (7) being adjustable by a distance $z_2$ with respect to the first image focal plane, $F_1'$. The invention also relates to a microscope comprising the accessory and a method for obtaining a focal image.

Fig. 3

EP 4 741 906 A1

**Description**

**Technical field of the invention**

The present invention falls within the field of optics. Specifically, it relates to an accessory for obtaining a focal image stack couplable to a host microscope.

**Background of the invention**

An optical microscope is an instrument designed to provide two-dimensional (2D) images of essentially flat microscopic samples. An optical microscope comprises an optical system formed by different elements centered with respect to an axis of symmetry, called optical axis:

- The stage plate is a support means where the sample is placed. It is a medium that is mechanically displaceable in the direction of the optical axis, that is, axially.
- The objective is formed by at least one lens and an aperture diaphragm. Said objective has a numerical aperture, NA, and an object focal length, $f_{ob}$, that is, distance between the lens, or lens system, of the microscope objective and the object focus, $F_{ob}$ a point that, after the rays pass through it, are refracted parallel to the optical axis.
- The tube lens is a lens, or lens systems, configured to collect the light emerging from the objective, and provide an actual 2D image of the sample flat on its image focal plane, that is, the plane perpendicular to the optical axis comprising the image focus, $F_T'$. The image focal length, $f_T$, depends on the manufacturer of the tube lens, or lens system, used. Traditionally, the objectives used in a microscope define a focal length, $f_T$, that ranges between 150 - 200 mm.
- The photosensitive recording medium is a pixelated medium, such as a CCD sensor or a CMOS sensor, with a pixel size $\delta_p$, configured to record the image formed in the image focal plane, $F_T'$, of the tube lens.

The focal length of the objective, $f_{ob}$, allows defining an object focal plane, a plane perpendicular to the optical axis that contains the object focus, $F_{ob}$. By placing a sample at the object focal plane, the objective provides, at infinity, an image of the sample.

Additionally, the focal length of the objective, $f_{ob}$, is also the distance between the optical center, the lens, or lens system, of the microscope objective and its image focus, $F_{ob}'$, that point at which, after being refracted, the rays that reach the objective in a direction parallel to the optical axis coincide. Similar to the object focal plane, an image focal plane of the objective, $F_{ob}'$, may be defined as the plane perpendicular to the optical axis that coincides with the image focus. Typically, the aperture diaphragm is located in the image focal plane of the objective $F_{ob}'$, and the lenses that compose it are designed to minimize the effect of aberrations.

In this way, in the present invention the object focus of a lens is designated indistinctly, $F$, and the object focal plane, which is that which is perpendicular to the optical axis and contains said object focus, $F$. This way of designating will also be applied to the image focus, $F'$, and the image focal plane. An optical microscope is represented by its lateral magnification, $M_h$, defined as the ratio between the size of the image and the size of the object, calculated as:

$$M_h = f_T/f_{ob} \tag{1}$$

The spatial resolution is also defined, which is given by the resolution limit:

$$r_{lim} = max\left\{\frac{\lambda}{2\text{NA}} + \frac{\delta_p}{M_h}, 2\frac{\delta_p}{M_h}\right\} \tag{2}$$

Where $\lambda$ is the average wavelength of the light emitted by the sample, $\delta_p$ is the pixel size of the photosensitive recording medium, NA is the numerical aperture of the objective and $M_h$ is the lateral magnification of the microscope.

The resolution limit is the minimum distance between two points located in the object plane, below which it is not possible to distinguish their images.

Finally, the depth of field (DoF) is defined, which indicates the length of the axial interval, around the plane that contains the focus $F_{ob}$, wherein the object can be placed without the image losing resolution, which can be calculated as:

$$DoF = \frac{\lambda}{NA^2} + \frac{\delta_p}{NA\,M_h} \qquad\qquad (3)$$

Microscopes are prepared to focus to a single plane, specifically the object focal plane ($F_{ob}$) of the objective. As indicated above; to perform the focusing tasks the stage plate is the displaced element, so that modification of the focused planes in the microscope is achieved.

For a 2D sample, the stage plate is axially displaced until the sample is located at the object focal plane, $F_{ob}$, of the objective. In that case, the sample image falls on the photosensitive recording medium or sensor.

In the case of 3D samples, only one section of the sample, that corresponding to the section above $F_{ob}$, provides a focused image. The displacement of the stage plate allows focusing different sections, transversal to the optical axis, of the sample. To capture an image stack of cross sections of 3D samples, an axial mechanical scanning process is therefore necessary wherein, in each step, the stage plate is mechanically displaced. However, it is necessary to wait a while until the system stabilizes to finally capture the image with the pixelated sensor.

However, this whole process may prove too slow for the case that the sample is in motion. Even in the case of static samples, but immersed in a liquid medium, mechanical scanning can modify the characteristics of the sample.

To avoid these problems, different proposals are known.

According to E. J. Botcherby et al., "An optical technique for remote focusing in microscopy," Opt. Commun. 281(4), 880-887 (2008), a coupling of three microscopes aligned in series is proposed. In this case, an axial scan of the sensor, located in the image plane of the third microscope, allows obtaining a stack of aberration-free focal images. However, this solution requires a large size and has high sensitivity to small misalignments, which makes it impossible or difficult to use in numerous applications.

Another way of addressing this problem was raised by S. Abrahamsson et al., "Fast multicolor 3D imaging using aberration-corrected multifocus microscopy," Nat. Methods 10, 60-63 (2013). In this alternative, multifocal microscopy is used, wherein a phase array with 3x3 different focal points is inserted into the optical path of the microscope. This allows the simultaneous acquisition of a stack of 9 focal images. However, this technique involves a reduction of the effective numerical aperture by a factor of 1/3, leading to low-resolution images.

The use of Fourier integral microscopy (also called Fourier lightfield microscopy) is also known, as seen in G. Scrofani et al., "FIMic: design for ultimate 3D-integral microscopy of in-vivo biological samples". Biomed. Opt. Express 9, 335-346 (2018). This technique makes it possible to capture, in a single shot and without the need for a scan, an array of orthographic perspectives of the 3D sample. The application of refocusing algorithms allows a focal image stack to be calculated. As in the previous case, this technique has the defect of reducing the resolution of the images by at least 1/3.

An alternative solution is based on the use of electrically tunable power lenses. These lenses may be acousto-optical (Tunable acoustic gradient (TAG) lens), electro-wetting (electro-wetting liquid lens) based, nematic, or consist of a Micro-mirror array lens (MMAs).

These solutions describe devices incapable of generating an optimal correction of aberrations, nor do the images have an independent increase in the power of the variable lens (or mirror). For this reason, it is required to correct the magnification and aberrations for each image of the focal stack. Additionally, in these solutions, the position of the focused focal plane does not depend linearly on the lens power.

Recently, James A. Strother, "Reduction of spherical and chromatic aberration in axial-scanning optical systems with tunable lenses," Biomed. Opt. Express 12, 3530-3552 (2021), describes a system for obtaining a stack of confocal microscopy focal images or light-sheet. Said solution discloses a system comprising three groups of lenses located consecutively on the same axis, the first and last tube lenses being intended to correct aberrations, and a group composed of a lens located between both groups an electrically tunable lens, such as an electro-wetting liquid lens. The relationships between the distances, focal planes, of the different elements of the system are designed according to formulas to correct aberrations.

As regards patent documents, US2020142188A1 can be highlighted. Said document relates to a device for obtaining focal images from a confocal microscope, which comprises several groups of lenses placed consecutively on the same axis, some being aspherical and others tube lenses intended to correct aberrations, and a group composed of an electrically tunable lens (ETL), such as a liquid lens.

Alternatively, US2018143419A1 discloses a device for obtaining a focal image stack from an optical microscope, comprising three groups of lenses located consecutively on the same axis, the first and last lenses being tube and relay lenses, intended to correct aberrations, and a group composed of a lens located between both groups an electrically tunable lens, such as a TAG lens and a photosensitive recording medium such as a CMOS and image processing and communications means.

In all these cases, the changes in voltage cause a change in power of the lens, which gives rise to a non-mechanical axial sweep and therefore free of inertia or vibrations. The problem with these proposals lies in the need to correct for magnification and aberrations for each image of the focal stack. In other words, none of these solutions achieves the optical optimization of the microscope in terms of numerical aperture, depth of field, magnification and resolution.

For this reason, they cannot be coupled to any microscope, maintaining the optical characteristics of microscopes, and providing vibration-free focusing capability to obtain a stack of images in confocal microscopy.

In terms of patents, the existence of documents disclosing devices that use varifocal lenses in combination with other lenses can also be highlighted. An example of this type of solution is US2019162945A1, which discloses, explicitly or implicitly, a device for obtaining a focal image stack with optical sectioning. As shown in Fig.28 of the aforementioned document, the device consists of an illumination system composed of a structured pattern, a converging lens, a beamsplitter cube and a microscope objective that incorporates a varifocal lens in its image focus. This lighting system enables projecting a structured pattern, with constant magnification, on different cross-sections of the specimen. Simultaneously the microscope, composed of the same objective as the illumination system, by a tube lens, and by a sensor located on the image focus of the tube lens, forms the image of each section, with constant magnification, on the sensor. This microscope allows the capture of focal image stacks with high resolution after complex computational processing. However, in the case of dense samples, the structure of the illumination pattern is lost, which deteriorates the image resolution.

An accessory for obtaining an image stack that provides simple, robust and portable operation is therefore desirable, so that said accessory is couplable to any microscope while maintaining the characteristics of said microscope and providing the ability to focus quickly and without causing vibrations or modifications in the scale of the respective images of the focal stack, avoiding the drawbacks existing in state-of-the-art devices.

Furthermore, due to the difficulty in characterizing optical systems, the use of a matrix formalism (ABCD) has been described:

$$\begin{pmatrix} A & B \\ C & D \end{pmatrix}$$

This matrix formalism (ABCD) allows calculating the path of the light rays that propagate in an optical system, relating the height (with respect to the optical axis) and the inclination of each ray in two transversal planes of the system, the most common matrices being:

- Matrix describing the propagation of rays between two planes spaced at a distance $z$,

$$T = \begin{pmatrix} 1 & -z \\ 0 & 1 \end{pmatrix} \tag{4}$$

- Matrix describing refraction in a focal length lens $f$,

$$L = \begin{pmatrix} 1 & 0 \\ 1/f & 1 \end{pmatrix} \tag{5}$$

- Matrix describing the propagation between plane F and plane F' of a focal length lens $f$,

$$F = \begin{pmatrix} 0 & -f \\ 1/f & 0 \end{pmatrix} \tag{6}$$

In these matrices, the element $C$ corresponds to the power (or inverse of the focal) of the system. When two planes related by the matrix are conjugate, that is, the second is an image of the first, element B is equal to 0. In this case of conjugate planes, the element $A$ is equal to the lateral magnification of the system and the element $D$ to the angular magnification of the system.

## Explanation of the Invention

The object of the present invention is to provide a simple, robust and portable solution to the problem of capturing focal image stacks free of aberrations, with constant lateral magnification and avoiding vibrations of a mechanical nature.

Specifically, in a first aspect, the present invention relates to an accessory for obtaining a focal image stack, couplable to an optical host microscope. Said accessory is couplable to a host microscope forming a coupled optical system, wherein said microscope comprises, consecutively arranged centered with respect to an optical axis:

- a support means of a sample-object,
- an objective comprising at least one lens with a focal length $f_{ob}$ and an aperture diaphragm, defining an object focal plane comprising an object focus $F_{ob}$; a plane $Q_0$, located at a distance $z_0$ with respect to $F_{ob}$, and an image focal plane comprising an image focus, $F'_{ob}$ ; wherein said planes are perpendicular to the optical axis of the microscope; and

- a converging tube lens, located at a distance d from the image focus, $F'_{ob}$ said tube lens defining an image plane comprising an image focus, $F'_T$ , at a distance $f_T$ with respect to the position of the tube lens.

The accessory comprises a first and a second converging coupling, and a varifocal lens arranged between said converging couplings.

The first converging lens coupling comprises at least one lens, which may also be formed by a lens system. Said first lens coupling has a focal length $f_{AC1}$ and an optical power $P_{AC1}$. According to this first converging coupling, a first object focal plane, $F_1$, a plane $Q_1$, located at a distance $z_1$ with respect to the object focal plane $F_1$, and a first image focal plane, $F'_1$ are defined.

For its part, the second converging lens coupling, located at a distance from the first converging coupling, comprises at least one lens, and may also be formed by a lens system. Said second converging lens coupling is inverted with respect to the first converging lens coupling. Equivalently to the first coupling, the second lens coupling has a focal length $f_{AC2}$, and an optical power $P_{AC2}$, defining a second object focal plane, $F_2$, in this case coinciding with the first image focal plane, $F'_1$, and a second image focal plane $F'_2$ .

Finally, the varifocal lens has a variable power $P_L$. The varifocal lens is displaceable along the optical axis, in the space between the first and second converging lens coupling, by being mechanically connected with a mechanical axial displacement means,

The coupling between the accessory and the host microscope is carried out such that the first object focal plane, $F_1$, coincides with the image focal plane of the tube lens, $F'_T$ , of the microscope whereto the accessory is coupled. Additionally, the varifocal lens, displaceable centered on the optical axis, is adjustable by a distance $z_2$ with respect to the first image focal plane, $F'_1$ , $z_2$ being:

$$z_2 = \left(\frac{f_{AC1}}{f_T}\right)^2 (f_T - d) \tag{7}$$

where $f_{AC1}$ is the focal length of the first converging coupling, $f_T$ is the focal length of the tube lens of the host microscope, and d is the distance at which the tube lens is disposed with respect to the plane $F'_{ob}$ .

In this way, the coupled optical system, formed by the host microscope and the accessory according to the present invention, has a lateral magnification $M$, according to the element A of the transfer matrix:

$$M = f_T \, f_{AC2} \, / \, (f_{ob} \, f_{AC1}) \tag{8}$$

In a second aspect of the invention, it relates to a microscope comprising an accessory as described above coupled to a host microscope. Thus, as shown above, the microscope according to the present invention exhibits a lateral magnification, $M$, proportional to, or even equal to, the lateral magnification of the host microscope, $M_h = f_T / f_{ob}$.

The proportionality factor $f_{AC2} / f_{AC1}$ allows the size and resolution of the sensor to be adjusted to the characteristics of the host microscope used to couple the accessory. Additionally, it is observed that this lateral increase is independent of the power value of the varifocal lens. $P_L$.

Thus, all images of the stack obtained by a microscope according to the present invention are captured at a same lateral magnification, proportional to the lateral magnification of the host microscope. In other words, the accessory allows modifying the focal plane to be focused at will, making it possible to obtain a focal image stack all of them with the same magnification.

Furthermore, the accessory does not modify the numerical aperture (NA) of the microscope according to the present invention. However, by modifying the system magnification, you can change the effective size, $\delta_p/M$, of the sensor pixels. Taking into account that the formula that determines the resolution limit is:

$$r_{lim} = max\left\{\frac{\lambda}{2\text{NA}} + \frac{\delta_p}{M}, 2\frac{\delta_p}{M}\right\}, \tag{9}$$

This allows improving the resolution limit of all images, compared to that provided by the host microscope.

The depth of field of each image is also unchanged, except for the variation of $M$

$$DoF = \frac{\lambda}{NA^2} + \frac{\delta_p}{NA\,M} \qquad\qquad (10)$$

Finally, in a third aspect of the invention, the present invention relates to a method for obtaining a focal image, wherein said method comprises the following steps:

- coupling an accessory according to any one of claims 1 to 11 in an optical system of a microscope, such that it $F_1$ coincides with the image focus of the tube lens, $F_T'$, of the microscope whereto it is coupled;

- adjusting the varifocal lens of said accessory to a distance $z_2$, the varifocal lens being conjugate with the plane $F_{ob}'$;

- adjusting the optical power $P_L$, so that:

the object focal plane, $F_{ob}$, the object focal plane $F_1$, corresponding to the first coupling (3), and the image focal plane $F_2'$, corresponding to the second coupling (6), of the accessory (100), form conjugate planes,

or,

the plane $Q_0$, the plane $Q_1$, corresponding to the first coupling (3), and the image focal plane of the fixture $F_2'$, corresponding to the second coupling (6) of the fixture (100), form conjugate planes; and

- recording the focal image.

The recording, preferably sequential by modifying the optical power of the varifocal lens, of the focal image can be carried out thanks to a recording medium arranged in association with the microscope of the present invention. Said recording medium is arranged to record an image stack generated in the plane $F_2'$. In addition, once the focal image stack has been recorded, it can be transmitted to an external image processing means.

Thereby, the present invention manages to improve the capacity of the accessories coupled in an optical host microscope, achieving the improved obtaining of a focal image stack.

According to the configuration of the present solution, an equipment and a method are achieved that provide greater stability, by eliminating vibrations generated by using moving elements during recording of the focal image stack. In addition, such a configuration maintains a lateral magnification proportional to the lateral magnification of the host microscope, irrespective of the power of the varifocal lens and the corresponding focus plane. This avoids the step of correcting the scale of each image in the stack, as is the case with current known solutions.

As there are no vibrations and the increase remains constant, the accuracy and repeatability of the measurements derived from the 3D analysis (topography, roughness, volume, etc.) is ensured. This results in an improvement in the accuracy and reliability of the measurements obtained.

Thanks to the configuration of the present invention, it is possible to adjust the fundamental properties of the host microscope, such as its lateral and axial resolution, its depth of field and its magnification. On the other hand, when it can be inserted into a commercial microscope, all its utilities can be used, for example, the various types of lighting. It also improves the performance of other typical 3D imaging techniques in microscopy, such as confocal or light-sheet imaging. In relation to the focus, it allows widening the axial range and its speed. The invention allows focusing in an axial range much greater than that of a piezoelectric system, although slightly lower than that of a motorized system, but the focusing process of the varifocal lens of the present invention is very fast, much more than a motorized mechanical system and of the order of the piezoelectric. All this with a considerable reduction in cost compared to other known systems such as motorized systems or piezoelectric systems. Also, this reduction extends to maintenance costs, where maintenance or adjustment is not required, and axial sweep step calibration that are required in other systems, such as mechanical systems.

Therefore, unlike other previous solutions such as, for example, US2010214639A1, the current solution allows making the use of the device more flexible with existing microscopes, while achieving greater precision in the adaptation and better resolution than that of the original objective.

In the figures of the present invention, reference is made to the following set of elements:

100    Couplable accessory
1    First lens of the first coupling
2    Second lens of the first coupling
3    First lens coupling
4    First lens of the second coupling
5    Second lens of the second coupling
6    Second lens coupling
7    Varifocal lens

8      Mechanical axial displacement means

9      Recording media

10      First M12 lens

11      Second M12 lens

12      First housing

13      Second housing

$z_1$      Axial spacing of the focal plane $Q_1$ with respect to the object focal plane $F_1$ of the first coupling

$Q_1$      Plane at a distance $z_1$ with respect to the object focal plane $F_1$

$z_2$      Axial spacing of the varifocal lens of the accessory from the image focus of the first coupling

$F_1$      Object focal plane of the first coupling

$F'_1$      Image focal plane of the first coupling

$f_{AC1}$      Focal length of the first coupling

$P_{AC1}$.      Optical power of the first coupling

$F_2$      Object focal plane of the second coupling

$F'_2$      Image focal plane of the second coupling

$f_{AC2}$      Focal length of the second coupling

$P_{AC2}$.      Optical power of the second coupling

$s_o$      Axial spacing of the object focal plane $F_1$ with respect to the housing of a first coupling comprising an M12 objective

$s_1$      Axial spacing of the image focal plane $F'_1$ with respect to the housing of a first coupling comprising an M12 objective

$s_2$      Axial spacing of the object focal plane $F_2$ with respect to the housing of a second coupling comprising an M12 objective

$s_3$      Axial spacing of the image focal plane $F'_2$ with respect to the housing of a second coupling comprising an M12 objective

$s_{F3}$      Axial spacing of the object focal plane $F_1$ with respect to the first lens of a first coupling

$s_{B3}$      Axial spacing of the image focal plane $F'_1$ with respect to the last lens of a first coupling $s_{F6}$      Axial spacing of the object focal plane $F_2$ with respect to the first lens of a second coupling

$s_{B6}$      Axial spacing of the image focal plane $F'_2$ with respect to the last lens of a second coupling

$e_3$      Axial spacing between first coupling lenses

$e_6$      Axial spacing between second coupling lenses

200      Host microscope

201      Support media/ stage plate

202      Microscope objective

221      Microscope objective lens

222      Aperture diaphragm

203      Tube lens

204      Optical axes

$f_{ob}$      Focal length of the objective lens

$F_{ob}$      Object focal plane comprising the object focus of the lens

$F'_{ob}$      Image focal plane comprising the image focus of the objective

$z_0$      Axial spacing between the plane $Q_0$ and the object plane $F_{ob}$

$Q_0$      Plane arranged at a spacing $z_0$ with respect to the object focal plane $F_{ob}$

$F'_T$      Image focal plane of the lens tube

$d$      Axial spacing between the tube lens object focus and the tube lens

$f_T$      Focal length of the tube lens

## Brief description of the figures

Figure 1 shows a diagram of one embodiment of a host microscope.

Figure 2 shows a diagram of an embodiment of an accessory for capturing a focal image stack, comprising a first and second converging lens coupling formed by an M12 lens objective.

Figure 3 shows a diagram of an embodiment of an accessory for capturing a focal image stack, comprising a first and second converging lens coupling formed by two converging lenses.

**Detailed description of the invention**

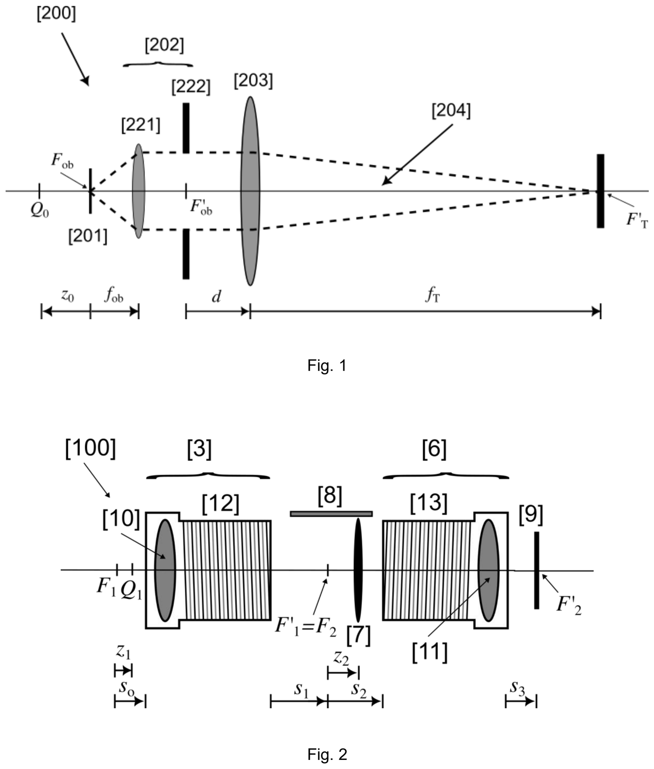

In a first aspect of the invention, an accessory (100) couplable to a host microscope (200) forming a coupled optical system, is disclosed. As shown in Figure 1, a host microscope (200), according to the present invention, comprises, consecutively arranged centered with respect to an optical axis (204):

- a stage plate, or support means (201), where a sample-object is located,
- an objective (202) comprising at least one lens (221) with a focal length $f_{ob}$ and an aperture diaphragm (222), defining an object focal plane, $F_{ob}$, comprising the object focus of the lens (221), a plane $Q_0$, located at a distance $z_0$ from the plane $F_{ob}$, and an image focal plane, $F'_{ob}$; comprising an image focus, wherein said planes are perpendicular to the optical axis of the microscope
- a converging tube lens (203), located at a distance d from the image focal plane, $F'_{ob}$, that plane comprising the image focus of the lens (221) of the objective (202), said tube lens (203) defining an image plane $F'_T$, , comprising the image focus of the tube lens (203), spaced at a distance $f_T$ with respect to the position of said tube lens (203);

According to the present invention, the accessory (100) comprises a first and a second converging coupling (3, 6), and a varifocal lens (7) arranged between said converging couplings (3, 6). The first converging lens coupling (3) comprises at least one lens, which may also be formed by a lens system. Said first lens coupling (3) has a focal length $f_{AC1}$ and an optical power $P_{AC1} = 1/f_{AC1}$. For its part, the second converging lens coupling (6) comprises at least one lens, and may also be formed by a lens system. Said second converging lens coupling (6) is a lens coupling inverted with respect to the first converging lens coupling (3), although it may differ in the lenses used. Equivalently to the first coupling (3), the second converging lens coupling (6) has a focal length $f_{AC2}$, and an optical power $P_{AC2} = 1/f_{AC2}$, which may or may not be equal to the focal length $f_{AC1}$ and the optical power $P_{AC1}$ of the first converging lens coupling (3).

Therefore, a first object focal plane, $F_1$, a plane $Q_1$ spaced at a distance $z_1$ with respect to the object focal plane, $F_1$ and a first image focal plane, $F'_1$ corresponding to the first converging lens coupling (3) of the accessory (100), and a second object focal plane, $F_2$, that coincides with the first image focal plane, $F'_1$, and a second image focal plane $F'_2$ corresponding to the second converging lens coupling (6) can be defined.

In accordance with the present invention, the varifocal lens (7) has a variable power $P_L$. In other words, the varifocal lens (7) is a lens of variable optical power, for example, being electrically tunable. Said varifocal lens (7) is displaceable, varying its axial position, along the optical axis existing between the first and second converging lens coupling (3, 6) on a mechanical means (8) of axial displacement. There is, therefore, a mechanical connection between the varifocal lens (7) and the mechanical means (8), so that a user can adjust the axial position of the varifocal lens (7). The range of the optical power of a varifocal lens (7) depends on the set configuration. A standard value of said optical power range is $-10\ m^{-1} < P_L < +10\ m^{-1}$. A high value in the range of the optical power would suppose improving the capacity of the lens, and would result in a greater number of applications of the accessory (100). For this reason, a preferred embodiment of the present invention comprises a varifocal lens (7) whose optical power range is as large as possible.

The coupling between the accessory (100) and the host microscope (200) is carried out such that the first object focal plane, $F_1$, coincides with the image focal plane, $F'_T$ of the tube lens (203) of the host microscope (200) whereto the accessory (100) is coupled. Consequently, the varifocal lens (7), displaceable centered on the optical axis, can be adjusted by a distance $z_2$ with respect to the first image focal plane $F'_1$, $z_2$ being:

$$z_2 = \left(\frac{f_{AC1}}{f_T}\right)^2 (f_T - d) \qquad\qquad (11)$$

wherein $f_{AC1}$ is the focal length of the first converging coupling (3), $f_T$ is the focal length of the tube lens (203) of the host microscope (200) and d is the axial spacing between the object focal plane of the objective (202) and the tube lens (203).

The axial displacement of the varifocal lens (7) is determined by the mechanical means (8) used. This mechanical means (8) has a mechanical connection with the varifocal lens (7) and can be actuated manually, or be configured for electronic actuation. Thanks to this ability to move the varifocal lens (7), the accessory (100) can be coupled to different commercial microscopes, said microscopes acting as the host microscope (200) according to the present invention.

Applying a matrix formalism, the transfer matrix ABCD between the planes $Q_1$ and $F'_2$ is obtained by calculating:

$$\mathbf{M}_S = \begin{pmatrix} 0 & -f_{AC2} \\ \frac{1}{f_{AC2}} & 0 \end{pmatrix} \begin{pmatrix} 1 & z_2 \\ 0 & 1 \end{pmatrix} \begin{pmatrix} 1 & 0 \\ P_L & 1 \end{pmatrix} \begin{pmatrix} 1 & -z_2 \\ 0 & 1 \end{pmatrix} \begin{pmatrix} 0 & -f_{AC1} \\ \frac{1}{f_{AC1}} & 0 \end{pmatrix} \begin{pmatrix} 1 & z_1 \\ 0 & 1 \end{pmatrix}$$

$$\mathbf{M}_S = \mathbf{M}_1 \begin{pmatrix} 1 & z_1 \\ 0 & 1 \end{pmatrix} \tag{12}$$

where,

$$\mathbf{M}_1 = \begin{pmatrix} -(f_{AC2}/f_{AC1})(1 - z_2 P_L) & f_{AC2} f_{AC1} P_L \\ -z_2^2 P_L/(f_{AC2} f_{AC1}) & -(f_{AC1}/f_{AC2})(1 + z_2 P_L) \end{pmatrix} \tag{13}$$

Therefore,

$$\mathbf{M}_S = \begin{pmatrix} -(f_{AC2}/f_{AC1})(1 - z_2 P_L) & -z_1(f_{AC2}/f_{AC1})(1 - z_2 P_L) + f_{AC2} f_{AC1} P_L \\ -z_2^2 P_L/(f_{AC2} f_{AC1}) & -z_1 z_2^2 P_L/(f_{AC2} f_{AC1}) - (f_{AC1}/f_{AC2})(1 + z_2 P_L) \end{pmatrix} \tag{14}$$

The value of $z_1$ is obtained by equaling to zero the element B of the matrix, that is

$$z_1 = \frac{(f_{AC1})^2 P_L}{1 - z_2 P_L} \tag{15}$$

Therefore, to quantify the effect of the varifocal lens (7) on the position of the focused plane, it is necessary to calculate a transfer matrix, $M_0$ between a plane $Q_0$, spaced at a distance $z_0$ from the object focal plane $F_{ob}$, and the plane $F_T'$.

$$\mathbf{M}_0 = \begin{pmatrix} 0 & -f_T \\ 1/f_T & 1 \end{pmatrix} \begin{pmatrix} 1 & f_T - d \\ 0 & 1 \end{pmatrix} \begin{pmatrix} 0 & -f_{ob} \\ 1/f_{ob} & 0 \end{pmatrix} \begin{pmatrix} 1 & z_0 \\ 0 & 1 \end{pmatrix}$$

$$\mathbf{M}_0 = \begin{pmatrix} -f_T/f_{ob} & -z_0 f_T/f_{ob} \\ (f_T - d)/(f_T f_{ob}) & z_0(f_T - d)/f_T f_{ob} - f_{ob}/f_T \end{pmatrix} \tag{16}$$

The transfer matrix between one plane $Q_0$ and the second image plane $F_2'$ of the accessory (100), where preferably the recording medium is arranged, can be obtained as:

$$\mathbf{M}_T = \mathbf{M}_1 \mathbf{M}_0 = \begin{pmatrix} A & B \\ C & D \end{pmatrix} \tag{17}$$

where

$$A = (f_{AC2} f_T) / (f_{AC1} f_{ob}) \tag{18}$$

and

$$B = z_0 f_T f_{AC2}/(f_{ob} f_{AC1}) - f_{AC2} f_{AC1} P_L f_{ob}/f_T \tag{19}$$

Also in this case, the value of $z_0$ is obtained by equalizing to zero the element B of the matrix:

$$z_0 = P_L f_{AC1}^2 f_{ob}^2 / f_T^2 \tag{20}$$

In this way, it is demonstrated that there is a proportionality relationship between the optical power $P_L$ of the varifocal lens (7), and the position of the focused focal plane, which allows determining the axial positions of the elements of the accessory (100), facilitating the calibration of the system by achieving that the coupling of a host microscope (200) and the accessory (100), according to the present invention, has a lateral magnification *M*, according to the element A of the transfer matrix:

$$M = f_T \, f_{AC2} \, / \, (f_{ob} \, f_{AC1}) \qquad\qquad (21)$$

In other words, the accessory (100) is configured to modify the focused focal plane at will, making it possible to obtain a focal image stack, where they all have the same magnification, without modifying the numerical aperture (NA) of the system, achieving an improvement in the resolution limit of all the images, compared to that provided by the host microscope (200). Optionally, the accessory (100) according to the present invention may further comprise a photosensitive recording medium (9) configured to sequentially record the focal image stack generated in the second image focal plane $F_2'$. Additionally, said photosensitive recording medium may in turn comprise a communication medium configured to transmit the stack of recorded images by means of recording to an image processing medium.

In a first embodiment of the invention, the accessory (100) comprises a first and a second converging coupling (3, 6) formed by an M12 objective. M12 objectives are objectives with good aberration correction and are used to focus distant objects on a low-cost sensor, in a wide variety of applications including video surveillance, automotive inspection, forensic imaging, among others.

As shown in Figure 2, the accessory (100) according to this first embodiment comprises a first converging coupling (3) formed by a first M12 lens (10) and a first housing (12), which is elongated with respect to the first M12 lens (10) in the direction of the entry of the light rays into the optical axis of the accessory (100). The M12 lens (10) is a commercial standard lens, which can be composed, in turn, by a coupling of several lenses. Thereby, the M12 lens (10) comprised in the first coupling (3) has a focal length $f_{10}$. Equivalently, the M12 lens (10) may be characterized in that its optical power is $P_{10} = 1/f_{10}$.

For its part, the housing (12), preferably made of plastic material, serves as a support for the M12 lens. This housing can have a thread that facilitates its installation centered on the optical axis of the system. According to the manufacture of the M12 objectives, the distances, $s_0$ and $s_1$, between each of the ends of the first housing (12) and the first object focal plane, $F_1$, and the first image focal plane, $F_1'$, respectively, can be defined.

Thus, the focal length of the first coupling (3) is equivalent to the focal length of the first M12 lens (10).

$$P_{AC1} = 1/f_{AC1} = P_{10} = 1/f_{10}$$

In this case, the second converging coupling (6) has a set of lenses similar to the first converging coupling (3), comprising an M12 lens (11). Thereby, the M12 lens (11) of the second coupling (6) has a focal length $f_{11}$. Similarly to the previous case, the M12 lens (11) can also be characterized in that it has optical power $P_{11} = 1/f_{11}$. Thereby, in a general way, the focal length of the second coupling (6) of the present embodiment can be defined as:

$$P_{AC2} = 1/f_{AC2} = P_{11} = 1/f_{11}$$

In contrast to the first converging coupling (3), the second converging coupling (6) is arranged with an inverted orientation. This orientation is an inverted orientation with respect to the initial design of this type of lens, whose objective was the focusing of distant objects on a sensor. Again the distances, $s_2$ and $s_3$, between each of the ends of the second housing (13) and the second object focal plane $F_2$ and the second image focal plane, $F_2'$, respectively, can be defined. In a preferred embodiment, where the second converging coupling (6) comprises an M12 lens (11) and is equal to the first converging coupling (3), the spacing of the first and second housing (12, 13) to the corresponding foci coincide two by two. Thus, due to the inverted orientation of the second converging coupling (6), the following is obtained:

$$s_o = s_3 \qquad \text{and} \qquad s_1 = s_2$$

In this embodiment, the variation of the axial position of the varifocal lens (7) along the optical axis between the first and second converging coupling (3, 6) is determined by the space existing between the first and second housing (12, 13). In a preferred embodiment, where $s_1 = s_2$, the adjustment distance, $z_2$, of the varifocal lens (7) must always be less than this distance. In an even more preferred embodiment, the accessory (100) may comprise a photosensitive recording medium (9) configured to record the focal image stack, preferably sequentially, that stack of images generated in the image focal plane $F_2'$, as shown in Figure 2. As indicated, this photosensitive recording medium (9) may further comprise a communication medium, not shown in Figure 2, configured to transmit the stack of recorded images to an image processing medium.

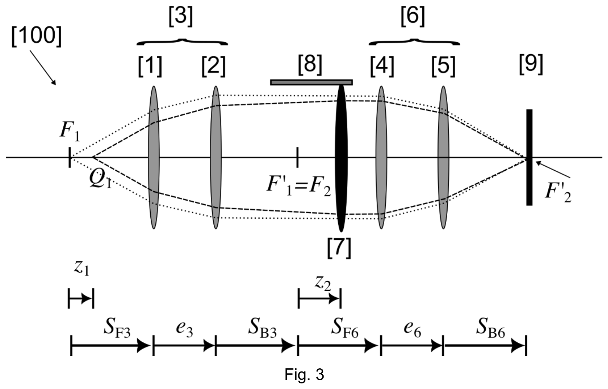

In an alternative embodiment, as shown in Figure 3, the accessory (100) comprises a first coupling (3) formed by a first converging lens (1) of optical power $P_1 = 1/f_1$, and a second converging lens (2), spaced at a distance $e_3$ with respect to the first converging lens (1), of optical power $P_2 = 1/f_2$. Thereby, the optical power, $P_3$, corresponding to this particular embodiment of the first coupling (3) can be defined as:

$$P_{AC1} = P_3 = P_1 + P_2 - e_3 P_1 P_2.$$

Equivalently, the focal length of the first converging lens coupling (3) can be defined as:

$$P_{AC1} = 1/f_{AC1} = P_3 = 1/f_3$$

In this way, the position of the foci, $F_3$ and $F_3'$, may be defined according to the distance of said foci, $F_3$ and $F_3'$, with respect to the first converging lens (1) and the second converging lens (2) as:

$$S_{B3} = (1 - eP_1)/P_3. \tag{22}$$

$$S_{F3} = (1 - eP_2)/P_3. \tag{23}$$

A preferred embodiment of the first converging lens (1) and the second converging lens (2) is a lens of the singlet type. In an even more preferred embodiment, each of these lenses comprises an achromatic doublet, which further allows improving aberration correction. Similarly, the second converging coupling (6) is formed by a first converging lens (4). This first lens (4) has a focal length, $f_4$, and an optical power $P_4 = 1/f_4$. For its part, the second converging lens (5), spaced at a distance $e_6$ with respect to the first lens (4), has a focal length $f_2$, its optical power being $P_5 = 1/f_5$. Thus, an optical power of this particular embodiment, $P_6$ of the second coupling (6) that can be defined as $P_{AC2} = P_6 = P_4 + P_5 - e_6 P_4 P_5$ is defined. Equivalently, the focal length of the first converging lens coupling (3) can be defined as:

$$P_{AC2} = 1/f_{AC2} = P_6 = 1/f_6$$

Likewise, the position of the foci, $F_6$ and $F_6'$, can be defined according to the distance of said foci, $F_6$ and $F_6'$, with respect to the first converging lens (4) and the second converging lens (5) of the second converging coupling (6) as:

$$S_{B6} = (1 - e_6 P_4)/P_6. \tag{24}$$

$$S_{F6} = (1 - e_6 P_5)/P_6. \tag{25}$$

In this embodiment, again, the varifocal lens (7) has a variable optical power $P_L$, for example, by being electrically tuned. Said varifocal lens (7) is mechanically joined with a mechanical means (8), actuated manually or electronically, for example, of the thread type, so that said varifocal lens (7) can vary its axial position.

According to the selected arrangement of the set of elements of the present invention, it is fulfilled that:

1.- The object focal plane, $F_1$, corresponding to the first converging coupling (3) of this particular embodiment, coincides with the image focus, $F_T'$, of the tube lens (203) of the host microscope (200) whereto the accessory (100) is coupled.

2.- The object focal plane, $F_2$, corresponding to the second converging coupling (6) of this particular embodiment, coincides with the image focal plane, $F_1'$, of the first converging coupling (3).

3.- The varifocal lens (7) is located at a distance $z_2$ with respect to the image focus $F_1'$, $z_2$ being:

$$z_2 = \left(\frac{f_{AC1}}{f_T}\right)^2 (f_T - d) \tag{26}$$

This distance ensures that the varifocal lens (7) is located in the plane conjugate with the aperture diaphragm (222) of the objective (202) comprised in the host microscope (200). In addition, in this particular embodiment, the following condition must be fulfilled:

$$z_2 < S_{F6} \qquad (27)$$

As noted, the final configuration of the couplings may be diverse, without requiring the use of a same type of lens in each of the converging couplings (3, 6). Depending on the coupling used, the varifocal lens (7) will vary its axial position, determined by the distance calculation $z_2$, achieving the conjugation of the desired planes. Thus, the first converging coupling (3) may comprise a single lens, e.g., an M12 lens (10), or set of lenses, e.g. a first converging lens (1) of optical power $P_1$, and a second converging lens (2), spaced at a distance $e_3$ with respect to the first converging lens (1), of optical power $P_2$, or other configuration of the lens selected by a user.

Likewise, the second converging coupling (6) may comprise a lens, for example an M12 lens (11), or a set of lenses, for example a first converging lens (4) of optical power $P_4$, and a second converging lens (5), spaced at a distance, $e_6$, with respect to the first converging lens (4), of optical power $P_5$.

In a preferred embodiment, the converging lenses (1, 2) and the converging lenses (4, 5), comprised in the first and second converging coupling (3, 6), respectively, may be constituted by at least one achromatic doublet.

Therefore, the accessory (100) according to the present invention can be configured according to the interests of the user, freely exchanging the first and second coupling (3, 6) of said accessory (100). In a preferred embodiment, the optical power, $P_{AC1}$, of the first converging lens coupling (3) is equal to the optical power, $P_{AC2}$, of the second converging lens coupling (6). Said preferred embodiment allows keeping the lateral magnification of the system constant and corresponding to the lateral magnification of the host microscope (200) used for the coupling of the accessory (100).

In a second aspect of the invention, an optical microscope is disclosed comprising an optical system arranged centered with respect to an optical axis formed by an accessory (100) according to the first aspect of the invention, coupled to the optical system of a host microscope (200). This coupling may be performed by the ocular port or by any of the camera ports available to the host microscope 200.

The microscope obtained in accordance with the present invention has the following plane conjugation conditions:

- when the varifocal lens (7) is adjusted to $P_L = 0$, the planes $F_{ob}$, $F_1$ and $F'_2$ form conjugate planes.

- When the varifocal lens (7) is adjusted to $P_L \neq 0$, the planes $Q_0$, $Q_1$ and $F'_2$ have to be conjugate.

- The plane coinciding with the distance $z_2$ of the varifocal lens (7) is a plane conjugate with to the plane $F'_{ob}$.

- The distance $z_2$ must always be less than the existing distance to the first or second coupling (3, 6) to allow the placement of the varifocal lens (7).

Finally, in a third aspect of the invention, the method for obtaining a focal image is disclosed. Said method comprises:

- coupling an accessory (100) according to the present invention on a host microscope, such that $F_1$, coincides with the image focus of the tube lens, $F'_T$ of the host microscope (200) whereto it is coupled;

- adjusting the varifocal lens (7) of said accessory at a distance $z_2$, $z_2$ being:

$$z_2 = \left(\frac{f_{AC1}}{f_T}\right)^2 (f_T - d) \; ;$$

- adjusting the optical power $P_L$, of the varifocal lens (7) so that:

the object focal plane, $F_{ob}$, the object focal plane $F_1$, corresponding to the first coupling (3), and the image focal plane $F'_2$, corresponding to the second coupling (6), of the accessory (100) form conjugate planes, either

the plane, $Q_0$, the plane $Q_1$, corresponding to the first coupling (3), and the image focal plane $F'_2$, corresponding to the second coupling (6), of the accessory (100) form conjugate planes; and

- recording the focal image.

Specifically, in an embodiment of the accessory (100) comprising a recording medium (9) associated with the image focal plane $F_2'$ , the recording of the focal image stack is carried out by sequentially recording a focal image stack generated in the image focal plane $F_2'$ . To this end, in a preferred embodiment, the method further comprises a step of modifying the optical power $P_L$ of the varifocal lens (7) and recording a second focal image sequentially, resulting in a focal image stack.

Additionally, said recording medium may be connected to other equipment, and the method further comprises the step of transmitting the recorded image stack to an external image processing means. In this way, when the varifocal lens (7) is adjusted to a power $P_L = 0$, the recording medium (9), arranged for the detection of a stack of images generated in the plane $F_2'$ is conjugate with the plane $F_1$, and therefore records the image of the section of the sample located in the plane $F_{ob}$ of the host microscope (200) wherein the accessory (100) is coupled.

It is important to note that, according to the configuration chosen for the first and second converging coupling (3, 6) of the accessory (100), this image can be recorded with a magnification $M = f_T/f_{ob}$, that is, a magnification equal to the lateral magnification $M_h$, that the host microscope (200) has.

Conversely, when the varifocal lens (7) is adjusted to a non-zero power, which may be positive or negative, the recording medium is conjugate with a plane located at a distance $z_1$ of $F_1$, being $z_1$.

$$z_1 = \frac{(f_{AC1})^2\, P_L}{1 - z_2 P_L}$$

In this way, an accessory (100) is achieved that allows obtaining a stack of images, in a simple, robust and portable way for a user. Said accessory (100) is couplable to any commercial microscope and is capable of maintaining the characteristics of said microscope and providing fast focusing capacity without causing vibrations or modifications in the scale of the respective images of the focal stack, avoiding the drawbacks existing in the devices known in the state of the art.

**Example 1**

For the determination of the coupling of a microscope according to the present invention, a host microscope (200) was used, which has the following parameters: (a) Objective (202): $f_{ob} = 10\ mm, NA = 0{,}4$; (b) Tube lens (203): $f_T = 200\ mm$ spaced at a distance $d = 20\ mm$ from the objective.

Additionally, a recording medium (9) with a pixel size $\delta_p = 2{,}5\ \mu m$, and an average wavelength of the light emitted by the sample is used $\lambda = 0{,}6\ \mu m$. The host microscope (200) thus exhibits lateral magnification, spatial resolution, and depth of field: $M_h = 20$, $r_{lim} = 0{,}88\ \mu m$, and $DoF = 4{,}1\ \mu m$.

According to a first embodiment of the invention, using an accessory (100) that comprises a first and second coupling (3, 6) constituted by two M12 lenses with focal length $f_{AC1} = f_{AC2} = 16\ mm$.

The varifocal lens (7) can vary the values of its optical power in the range:

$$-10\ m^{-1} < P_L < +10\ m^{-1}.$$

The following results are obtained: Varifocal lens position (7): $z_2 = +1{,}2\ mm$.

The range of planes that can be focused by varying the power of the varifocal lens is:

$$-6{,}4\ \mu m < z_0 < +6{,}4\ \mu m$$

Thereby, the lateral magnification, spatial resolution and depth of field of each image of the stack obtained with this accessory is $M = 20$, $r_{lim} = 0{,}88\ \mu m$, and $DoF = 4{,}1\ \mu m$.

Alternatively, with a second embodiment of the invention, using an accessory (100) comprising a first and second coupling (3, 6) converging with two converging lenses (1, 2) and two lenses (4, 5), respectively, of focal length $f_1 = f_5 = 75\ mm$ and $f_2 = f_4 = 50\ mm$, spaced at a distance $e_3 = e_6 = 40\ mm$.

The lenses of the second coupling (6) are the same as the lenses of the first converging coupling (3). Thus, the first coupling (3) has an order of lenses (1, 2), while the second coupling has an order of lenses (4, 5), equivalent to the lenses (2, 1) of the first coupling, in a reverse manner as described above.

By using a varifocal lens (7) having an optical power $P_L$ in the range -10 $m^{-1} < P_L < +10\ m^{-1}$, the following results are obtained:

First converging coupling (3): $S_{B3}$ = 20,6 *mm*, $S_{F3}$ = 8,8 mm
Second converging coupling (6): $S_{F6}$ = 20,6 *mm*, $S_{B6}$ = 8,8 mm
Varifocal lens position (7): $z_2$ = +8,8 *mm.*

The range of planes that can be focused by varying the power of the varifocal lens is:

$$-48{,}7\ \mu m < z_0 < +48{,}7\ \mu m$$

the lateral magnification, spatial resolution and depth of field of each image of the stack obtained with this accessory is: *M* = 20, $r_{lim}$ = 0,88 $\mu m$, and *DoF* = 4,1 $\mu m$.

As can be seen, independently of the embodiment of the accessory used, since both embodiments have a focal length of the first converging coupling (3) equal to the focal length of the second converging coupling (6), the parameters of the resulting microscope correspond to the parameters of the host microscope (200). However, according to the accessory (100) used, a variation can be achieved, among other parameters of the range of focusable planes.

**Claims**

1.   - An accessory for obtaining a focal image stack couplable to a host microscope forming a coupled optical system, wherein said host microscope (200) comprises, consecutively arranged centered with respect to an optical axis (204): a support means (201) of a sample-object, an objective (202) comprising at least one lens (221) with a focal length $f_{ob}$ and an aperture diaphragm (222), defining an object focal plane $F_{ob}$ comprising an object focus, a plane $Q_0$, located at a distance $z_0$ with respect to the object focal plane $F_{ob}$, and an image focal plane $F'_{ob}$ said image focal plane, $F'_{ob}$ comprising an image focus; wherein said planes are perpendicular to the optical axis (204) of the host microscope (200); and a converging tube lens (203), located at a distance d with respect to the image focal plane, $F'_{ob}$ said tube lens (203) defining an image focal plane $F'_T$, said image focal plane, $F'_T$ comprising an image focus, at a distance $f_T$ with respect to the axial position of the tube lens (203); wherein the accessory (100) is **characterized in that** it comprises a first converging lens coupling (3) comprising at least one lens, wherein said first converging lens coupling (3) has a focal length $f_{AC1}$ and an optical power $P_{AC1}$, defining a first object focal plane $F_1$, a plane $Q_1$, located at a distance $z_1$ with respect to the plane $F_1$, and a first image focal plane, $F'_1$; a second converging lens coupling (6) comprising at least one lens, wherein said second converging lens coupling (6) is a lens coupling inverted with respect to said first converging lens coupling (3), where the second converging lens coupling (6) has a focal length $f_{AC2}$, and an optical power $P_{AC2}$, defining a second object focal plane, $F_2$ that coincides with the first image focal plane $F'_1$, and a second image focal plane $F'_2$; and a varifocal lens (7), of variable power $P_L$, displaceable along the optical axis between the first and second converging lens coupling (3, 6) on a mechanical means (8) of axial displacement, the accessory (100) being couplable to a host microscope (200) such that the first object focal plane, $F_1$, coincides with the image focal plane, $F'_T$, of the tube lens (203) of the host microscope (200); and said varifocal lens (7) being adjustable by a distance $z_2$ with respect to the first image focal plane, $F'_1$, $z_2$ being:

$$z_2 = \left(\frac{f_{AC1}}{f_T}\right)^2 (f_T - d)\ .$$

2.   The accessory for obtaining a focal image stack according to claim 1, wherein the accessory (100) comprises a photosensitive recording medium (9) configured to record, sequentially, the focal image stack generated in the second image focal plane, $F'_2$.

3.   The accessory for obtaining a focal image stack according to claim 2, wherein said photosensitive recording medium (9) further comprises a communication medium configured to transmit the stack of recorded images to an image processing means.

4.   The accessory for obtaining a focal image stack according to any one of claims 1 to 3, wherein the first converging lens coupling (3) comprises a first converging lens (1) of optical power $P_1$, and a second converging lens (2), spaced at a distance $e_3$ with respect to the first converging lens (1), of optical power $P_2$, the power of the coupling being $P_{AC1} = P_1 +$

$P_2 - e_3P_1P_2$.

5. The accessory for obtaining a focal image stack according to claim 4, wherein the first and/or second converging lens (1, 2) comprises an achromatic doublet.

6. The accessory for obtaining a focal image stack according to any one of claims 1 to 3, wherein the first coupling (3) comprises an M12 lens (10) and a housing (12).

7. The accessory for obtaining a focal image stack according to any one of claims 1 to 6, wherein the second coupling (6) comprises a first converging lens (4) of optical power $P_4$, and a second converging lens (5), spaced at a distance, $e_6$, with respect to the first converging lens (4) of the second converging coupling (6), of optical power $P_5$, the power of the coupling being $P_{AC2} = P_4 + P_5 - e_6P_4P_5$

8. The accessory for obtaining a focal image stack according to any one of claims 1 to 6, wherein the second coupling (6) comprises an M12 lens (11) and a housing (13).

9. The accessory for obtaining a focal image stack according to any one of claims 1 to 8, wherein the optical power, $P_{AC1}$, of the first converging lens coupling (3) is equal to the optical power, $P_{AC2}$, of the second converging lens coupling (6).

10. The accessory for obtaining a focal image stack according to any one of claims 1 to 9, wherein the mechanical axial displacement means (8) is manually actuated.

11. The accessory for obtaining a focal image stack according to any one of claims 1 to 9, wherein the mechanical axial displacement means (8) is electronically actuated.

12. Optical microscope comprising an optimal system arranged centered with respect to an optical axis, wherein said optical microscope is **characterized in that** it comprises an accessory (100) according to any one of claims 1 to 11, coupled to the optical system of a host microscope (200).

13. Method for obtaining a focal image, the method comprising:

- coupling an accessory (100) according to any one of claims 1 to 11 on a host microscope (200), such that $F_1$, coincides with the image focus, $F'_T$, of the tube lens (203) comprised in the host microscope (200) whereto it is coupled;
- adjusting the varifocal lens (7) of said accessory (100) at a distance $z_2$, $z_2$ being:

$$z_2 = \left(\frac{f_{AC1}}{f_T}\right)^2 (f_T - d) \; ;$$

- adjusting the optical power $P_L$ of the varifocal lens (7) such that:

the object focal plane, $F_{ob}$, the object focal plane $F_1$, corresponding to the first coupling (3), and the image focal plane $F'_2$, corresponding to the second coupling (6), of the accessory (100) form conjugate planes, either

the plane, $Q_0$, the plane $Q_1$, corresponding to the first coupling (3), and the image focal plane $F'_2$, corresponding to the second coupling (6), of the accessory (100) form conjugate planes; and

- recording the focal image.

14. Method for obtaining a focal image, according to claim 13, wherein the method comprises, once the focal image has been recorded, modifying the optical power $P_L$, of the varifocal lens (7) and recording a second focal image.

15. Method for obtaining a focal image, according to any one of claims 13 to 14, the recorded focal image is generated in the focal plane image of the accessory, $F'_2$.

16. Method for obtaining a focal image, according to any one of claims 14 to 15, wherein the method further comprises transmitting the recorded image stack to an external image processing means

Fig. 1

Fig. 2

Fig. 3

# INTERNATIONAL SEARCH REPORT

| International application No. |
| --- |
| PCT/ES2024/070384 |

## A. CLASSIFICATION OF SUBJECT MATTER

*G02B21/36* (2006.01)

According to International Patent Classification (IPC) or to both national classification and IPC

## B. FIELDS SEARCHED

Minimum documentation searched (classification system followed by classification symbols)
G02B

Documentation searched other than minimum documentation to the extent that such documents are included in the fields searched

Electronic data base consulted during the international search (name of data base and, where practicable, search terms used)

EPODOC, INVENES, WPI, INSPEC, NPL

## C. DOCUMENTS CONSIDERED TO BE RELEVANT

| Category* | Citation of document, with indication, where appropriate, of the relevant passages | Relevant to claim No. |
| --- | --- | --- |
| A | US 2019162945 A1 (HUA, HONG ET AL.) 30/05/2019, abstract, paragraphs [0005, 0006, 0055, 0057, 0059, 0060, 0146, 0152, 0188, 0192, 0193]; figures 1, 2, 28. | 1-16 |
| A | US 2010214639 A1 (WATSON, MATHEW D. ET AL.) 26/08/2010, paragraphs [0031, 0032, 0046]; figure 6. | 1-16 |
| A | DONG, LIANG et al.: "Light-sheet light-field fluorescence microscopy". Optics And Lasers In Engineering, 30/06/2022 [on line][retrieved the 27/09/2024]. Retrieved from <URL: https://www.sciencedirect.com/science/article/pii/S0143816622000707>, ISSN 0143-8166, <DOI: 10.1016/j.optlaseng.2022.107015> the whole document. | 1-16 |

☐ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 28/09/2024 | **(02/10/2024)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | F. Domínguez Gómez Telephone No. 913498520 |

Form PCT/ISA/210 (second sheet) (July 2022)

## INTERNATIONAL SEARCH REPORT

Information on patent family members

International application No.

PCT/ES2024/070384

| Patent document cited in the search report | Publication date | Patent family member(s) | Publication date |
|---|---|---|---|
| US2019162945 A1 | 30.05.2019 | US10725279 B2 | 28.07.2020 |
| | | WO2017177180 A1 | 12.10.2017 |
| US2010214639 A1 | 26.08.2010 | JP2012518794 A | 16.08.2012 |
| | | CN102428343 A | 25.04.2012 |
| | | CN102428343B B | 20.08.2014 |
| | | AU2010215794 A1 | 22.09.2011 |
| | | AU2010215794B B2 | 01.05.2014 |
| | | CA2752878 A1 | 26.08.2010 |
| | | CA2752878 C | 22.12.2015 |
| | | WO2010096786 A2 | 26.08.2010 |
| | | WO2010096786 A3 | 17.02.2011 |
| | | EP2406580 A2 | 18.01.2012 |
| | | EP2406580 A4 | 13.05.2015 |
| | | US8254023 B2 | 28.08.2012 |

## REFERENCES CITED IN THE DESCRIPTION

**Patent documents cited in the description**

- US 2020142188 A1
- US 2018143419 A1
- US 2019162945 A1
- US 2010214639 A1

**Non-patent literature cited in the description**

- **E. J. BOTCHERBY et al.** An optical technique for remote focusing in microscopy. *Opt. Commun.*, 2008, vol. 281 (4), 880-887
- **S. ABRAHAMSSON et al.** Fast multicolor 3D imaging using aberration-corrected multifocus microscopy. *Nat. Methods*, 2013, vol. 10, 60-63
- **G. SCROFANI et al.** FIMic: design for ultimate 3D-integral microscopy of in-vivo biological samples. *Biomed. Opt. Express*, 2018, vol. 9, 335-346
- **JAMES A. STROTHER**. Reduction of spherical and chromatic aberration in axial-scanning optical systems with tunable lenses. *Biomed. Opt. Express*, 2021, vol. 12, 3530-3552